(19) Europäisches Patentamt
European Patent Office
Office européen des brevets

(11) **EP 4 708 738 A1**

(12) **EUROPEAN PATENT APPLICATION**

(43) Date of publication:
**11.03.2026 Bulletin 2026/11**

(21) Application number: **25190796.0**

(22) Date of filing: **21.07.2025**

(51) International Patent Classification (IPC):
***H04K 3/00*** *(2006.01)*

(52) Cooperative Patent Classification (CPC):
**H04K 3/22**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.09.2024 US 202418829829**

(71) Applicant: **Nokia Solutions and Networks Oy 02610 Espoo (FI)**

(72) Inventors:
• **Dion, Gino**
  **Kingston, E5N1P9 (CA)**
• **Vanhastel, Stefaan**
  **9000 Ghent (BE)**

(74) Representative: **Bryers Intellectual Property Ltd Bristol & Bath Science Park Dirac Crescent, Emerson's Green Bristol BS16 7FR (GB)**

(54) **WIRELESS JAMMING DETECTION AND MITIGATION**

(57)     A processor-implemented sentry agent implemented at an access point or backend of a wireless network, such as a Wi-Fi LAN, detects jamming by gathering performance data associated with communications in the network, generating a plurality of metrics based on the performance data, and determining whether jamming exists based on the metrics, which may include two or more of a signal-to-noise ratio (SNR) metric, a packet error rate (PER) metric, a throughput metric, a latency metric, a jitter metric, a modulation and coding scheme (MCS) metric, a retransmission rate metric, a bit error rate (BER) metric, a connection stability metric, and a channel utilization metric. In some implementations, the sentry agent generates a jammer-detection variable for each metric based on (i) the metric itself and/or (ii) changes in the metric over time, generates a jammer-detection score based on the jammer-detection variables, and determines whether jamming exists based on the jammer-detection score.

FIG. 1     100

**Description**

FIELD OF THE DISCLOSURE

The present disclosure relates to wireless networks, such as Wi-Fi networks, and, more specifically but not exclusively, to techniques for detecting jamming and intentional interference of Wi-Fi communications.

BACKGROUND

This section introduces aspects that may help facilitate a better understanding of the disclosure. Accordingly, the statements of this section are to be read in this light and are not to be understood as admissions about what is prior art or what is not prior art.

There has been a dramatic increase in video surveillance equipment being used by homeowners. Doorbell, surveillance, and security cameras are all very popular, and the vast majority of them rely on in-home Wi-Fi networks for connectivity. In step with the increase in adoption of Wi-Fi video surveillance is the use of active Wi-Fi jamming devices by thieves to prevent the video identification and recording of nefarious activities.

There exists a significant lack of (hardware or software) tools for detecting intentional Wi-Fi jamming situations. While off-the-shelf RF (Radio Frequency) meters may be able to detect an increase in spectrum activity and noise, they are not suited for continuous monitoring, are typically wideband in nature, do not focus purely on unlicensed Wi-Fi frequencies (e.g., 2.4GHz, 5GHz, and 6GHz bands), and can be relatively expensive. While there are a few more-sophisticated devices, e.g., the PKI 6825 Jammer Detector from PKI Electronic Intelligence of Hamburg, Germany, they are physical in nature and require manual use and interaction. They are not suited for continuous monitoring and fall short when it comes to a mesh Wi-Fi network, where some APs might be affected and under attack, while others might not.

Distinguishing active jamming from regular background noise and interference can be very difficult in ultra-dense residential areas that are already oversaturated in the 2.4GHz band. There are also strong technical challenges to providing mitigation techniques to most jamming attacks, mostly due to the fact that the Wi-Fi capabilities of the end-devices (video cameras, etc.) are very basic and simplistic in nature and don't provide proper countermeasures.

SUMMARY

Problems in the prior art are addressed in accordance with the principles of the present disclosure by a Wi-Fi sentry security system that uses sophisticated algorithms to analyze and detect nefarious Wi-Fi jamming based on the real-time performance data available on Wi-Fi access points (many times per second), in combination with active testing and probing of end-device connectivity (e.g., from a sentry agent residing on an access point or network backend), that is continuously reviewing the connection state of end-user devices connected to the access point. The main challenges come from understanding the impact of various jamming techniques on Wi-Fi performance data and developing a signature-based detection technique that provides a very-low false-positive detection rate.

In at least one embodiment of the present disclosure, performance data associated with communications in the wireless network is gathered, a plurality of metrics are generated based on the performance data, and the existence of jamming is determined based on the plurality of metrics.

A first aspect of the present disclosure provides an apparatus for detecting jamming in a wireless network, the apparatus comprising at least one processor, and at least one memory storing instructions that, upon being executed by the at least one processor, cause the apparatus at least to gather performance data associated with communications in the wireless network, generate a plurality of metrics based on the performance data, and determine whether jamming exists based on the plurality of metrics.

In an implementation of the first aspect, the apparatus can determine whether the jamming exists by generating a jammer-detection variable based on the metric and/or changes in the metric over time, generating a jammer-detection score based on the plurality of jammer-detection variables, and determining whether the jamming exists based on the jammer-detection score.

At least one jammer-detection variable can be generated by performing an additive calculation based on the metric and the changes in the metric over time. At least one jammer-detection variable can be generated by performing a multiplicative calculation based on the metric and the changes in the metric over time. At least one jammer-detection variable can be generated by performing a logarithmic calculation based on the metric and the changes in the metric over time.

In an example, the jammer-detection score can be generated by comparing each jammer-detection variable to a corresponding threshold to determine whether the jammer-detection variable is indicative of jamming, and the jammer-detection score is the number of jammer-detection variables that are indicative of jamming. The jammer-detection score can be generated by comparing each jammer-detection variable to a corresponding threshold to determine whether the jammer-detection variable is indicative of jamming, and the jammer-detection score can be increased by a value based on how much the corresponding threshold was violated. The jammer-detection score can be generated by comparing each jammer-detection variable to a corresponding threshold to determine whether the jammer-detection variable is indicative of jamming, and the jammer-detection score can be a weighted sum based on the jammer-detection variables that are indicative of jamming and relative importance of those jammer-detection variables to detecting jamming. The jammer-detection score can be generated by directly combining the plurality of jammer-detection variables.

The plurality of metrics can comprise two or more of a signal-to-noise ratio (SNR) metric, a packet error rate (PER) metric, a throughput metric, a latency metric, a jitter metric, a modulation and coding scheme (MCS) metric, a retransmission rate metric, a bit error rate (BER) metric, a connection stability metric, and a channel utilization metric. The plurality of metrics can comprise a signal-to-noise ratio (SNR) metric. The plurality of metrics can comprise a packet error rate (PER) metric. The plurality of metrics can comprise a throughput metric. The plurality of metrics can comprise a latency metric. The plurality of metrics can comprise a jitter metric. The plurality of metrics can comprise a modulation and coding scheme (MCS) metric. The plurality of metrics can comprise a retransmission rate metric. The plurality of metrics can comprise a bit error rate (BER) metric. The plurality of metrics can comprise a connection stability metric. The plurality of metrics can comprise a channel utilization metric. The apparatus can comprise an access point of the wireless network. The apparatus can comprise a backend of the wireless network. The wireless network can comprise a Wi-Fi network.

A second aspect of the present disclosure provides a processor-implemented method for detecting jamming in a wireless network, the method comprising the processor gathering performance data associated with communications in the wireless network, generating a plurality of metrics based on the performance data, and determining whether jamming exists based on the plurality of metrics.

## BRIEF DESCRIPTION OF THE DRAWINGS

Embodiments of the disclosure will become more fully apparent from the following detailed description, the appended claims, and the accompanying drawings in which like reference numerals identify similar or identical elements.

FIG. 1 is a simplified hardware block diagram of an example wireless local area network (WLAN) in which both a wireless consumer device and a jammer are located within the coverage area of an access point (AP) of the WLAN; and

FIG. 2 is a flow diagram of processing performed by a sentry agent implemented in either the AP or the backend of the WLAN of FIG. 1 to detect and mitigate jamming according to certain embodiments.

## DETAILED DESCRIPTION

Detailed illustrative embodiments of the present disclosure are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of example embodiments of the disclosure.

As used herein, the singular forms "a," "an," and "the," are intended to include the plural forms as well, unless the context clearly indicates otherwise. It further will be understood that the terms "comprises," "comprising," "contains," "containing," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functions/acts involved.

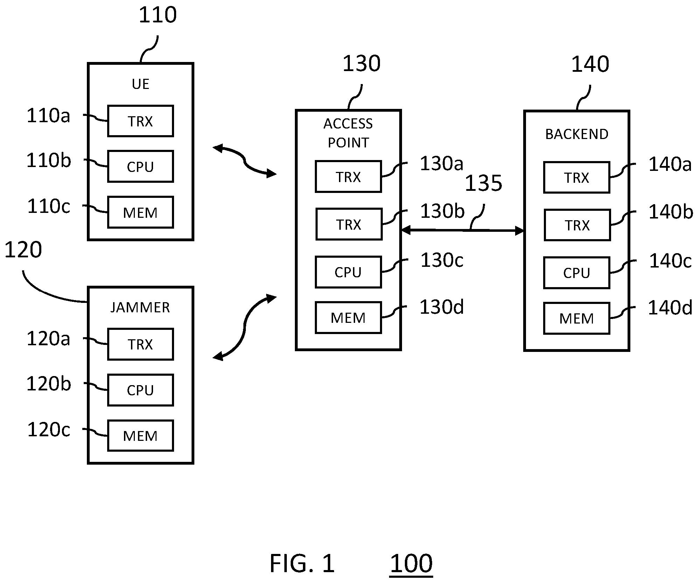

FIG. 1 is a simplified hardware block diagram of an example wireless local area network (WLAN) 100 in which a wireless consumer device 110 (aka user equipment or UE, for short), such as a surveillance camera, and a wireless jammer 120 are located within the coverage area of an access point (AP) 130 of the WLAN 100 that is, in turn, connected, via a wired, wireless, or optical backhaul link 135, to a backend communication system 140 that supports communication between the AP 130 and wireless devices within its coverage area as well as between the AP 130 and the outside world. Those skilled in the art will understand that there may be other wireless devices (not shown) within the coverage area of the AP 130. In addition, although not shown in FIG. 1, the WLAN 100 may have additional APs as well as other backend elements that support the functionality of the WLAN 100 for communicating with multiple other wireless devices.

The following description assumes that the WLAN 100 is a Wi-Fi network that conforms to appropriate Wi-Fi standards. Those skilled in the art will understand how to implement other embodiments that conform to other wireless standards.

As shown in FIG. 1, the UE 110 includes (i) a wireless transceiver (TRX) 110a for transmitting wireless signals to and receiving wireless signals from the AP 130 and (ii) one or more processors (e.g., CPU and/or GPU microprocessors) 110b for controlling the operations of the UE 110, including the processing of outgoing and incoming signals to and from the AP 130 based on software code stored in the UE's memory (MEM) 110c. The jammer 120 includes analogous elements having analogous labels. The AP 130 includes (i) a wireless transceiver 130a for transmitting and receiving wireless signals to and from the UE 110, (ii) a backend transceiver 130b for transmitting and receiving (wired, wireless, or optical, depending on the implementation) signals to and from the backend 140 via backhaul 135, and (iii) one or more processors 130c for controlling the operations of the AP 130, including the processing of outgoing and incoming signals to and from the UE 110 and the backend 140 based on software code stored in the AP's memory 130d. The backend 140 includes analogous elements having analogous labels include an AP transceiver 140a for communicating with the AP 130 and an outside world transceiver 140b for communicating with the outside world.

In certain embodiments, a software sentry agent, which may be containerized (e.g., Docker container, LXC container, etc.), implemented on the AP 130 of FIG. 1 (or, alternatively, on the backend 140) analyzes real-time Wi-Fi performance data (UE to/from AP) to identify and detect events when the Wi-Fi spectrum (e.g., 2.4GHz, 5GHz, and/or 6GHz unlicensed bands) is subjected to intentional jamming interference (spectrum and protocol levels) for the purpose of disabling or otherwise interfering with communications between the UE 110 and the AP 130. Depending on the implementation, jammer-detection analysis can be done on the AP itself and/or on the backend 140 with possible assistance from a cloud-based service.

The sentry agent can react to the detection of such an event by sending notifications to the end-user, a CSP (Communication Service Provider), and/or 3rd party security providers. Alarms can be sent (i) via a WAN interface (e.g., fiber, digital subscriber line (DSL), digital over cable service interface specifications (DOCSIS), fixed wireless access (FWA)) that is not subjected to the interference and/or (ii) to a mobile device in or near the building (e.g., home, business) affected by the active jamming via the cellular network (e.g., in-app mobile device notification). In addition or instead, a building alarm system could get automatically triggered by such an event, the same way it would if someone triggered a motion sensor inside the building.

Accurate detection and identification of an active Wi-Fi jamming attack is very difficult, since it cannot typically be accurately based on a single metric or datapoint. There are many well-known causes of interference that can impact Wi-Fi performance, possibly making it look like an attack, when, in fact, it may be nothing more than transient interference (such as from a microwave oven), noisy spectrum environment (such as in ultra-dense residential areas), or other sources of non-Wi-Fi wireless communications also operating in unlicensed spectrum (e.g., baby monitors, etc.). The speed of detection may also be crucial, for example, during the theft of a vehicle from the driveway of a residential unit, which can take place in just a few minutes and, in some cases, under one minute.

Design of the sentry agent relies on the fine art and understanding of how different types of jammers impact a multitude of Wi-Fi performance and security metrics and variables.

There are two different categories of jammers: EMF (electromagnetic field) blasters and Wi-Fi denial-of-service attackers. An EMF blaster disrupts a Wi-Fi access point and Wi-Fi device connectivity by emitting strong electromagnetic signals on the same frequency bands that Wi-Fi devices use for communication. In the latest generation of Wi-Fi (Wi-Fi 7), operation can take place in following three bands:

- 2.4 GHz Band: This is a widely used band with better range but lower speeds compared to higher-frequency bands. The 2.4 GHz band is ideal for longer-distance coverage and compatibility with older devices;

- 5 GHz Band: This band offers higher speeds than the 2.4 GHz band but with a shorter range. The 5 GHz band is less crowded and provides better performance for high-speed data transfer and low-latency applications; and

- 6 GHz Band: This is the newest band introduced with Wi-Fi 6E and further utilized by Wi-Fi 7. The 6 GHz band provides a larger spectrum, allowing for faster data rates, lower latency, and less interference. The 6 GHz band is particularly useful for applications requiring high bandwidth, such as streaming, gaming, and virtual reality.

In terms of how an EMF blaster operates, there are several mechanisms of disruption, such as (but not limited to):

- Broadband Noise Emission: The jammer emits noise in a broad range of radio frequencies across the 2.4 GHz, 5 GHz, and/or 6 GHz bands, thereby making it difficult or impossible for Wi-Fi devices to distinguish legitimate signals from the noise;

- Channel-Specific Jamming: Some advanced jammers can target specific channels within the Wi-Fi spectrum. By focusing on the channel used by the AP, the jammer maximizes disruption effectiveness. This attack is the predominant one, since the vast majority of IoT style devices (such as security cameras, doorbell cameras, etc.) operate on the 2.4 GHz band due to its longer range of operation; and

- Continuous or Pulse Jamming: Jammers can emit a continuous signal to block communication persistently, or they can use pulse jamming, which periodically disrupts communication.

The effects of an EMF blaster on Wi-Fi communications will impact a multitude of performance and security metrics, such as signal-to-noise ratio (SNR). In some implementations, SNR is measured in "dB" (decibels), which is a logarithmic unit used to measure the ratio between two values, in this case as the ratio of signal power to noise power. The formula for SNR in decibels is:

$$SNR\ (dB) = 10 \times log_{10}\left(\frac{Signal\ Power}{Noise\ Power}\right)$$

SNR in decibels (dB) provides a relative measure of how much stronger the signal is compared to the noise. A higher SNR in dB indicates a cleaner signal with less noise relative to the signal, while a lower SNR suggests more noise in relation to the signal. For example, an SNR of 20 dB means that the signal power is 100 times greater than the noise power, an SNR of 0 dB means that the signal power is equal to the noise power, and a negative SNR (e.g., -10 dB) means that the noise power is greater than the signal power.

Leading indicators in the SNR context include:

- Increased Noise Floor: The EMF blaster increases the noise level on the 2.4 GHz band. This raised noise floor makes it harder for the Wi-Fi access point and client devices to differentiate the desired Wi-Fi signal from the background noise; and

- Reduced SNR: As the noise level rises due to the EMF blaster's interference, the SNR decreases. This is because the SNR is calculated as the ratio of signal power to noise power. With noise power increasing, the ratio (and therefore the SNR) decreases.

In a typical Wi-Fi network, a good SNR is usually considered to be 20 dB or higher. Moderate interference might lower the SNR to around 15-20 dB, which can start to degrade performance. Severe interference from a powerful EMF blaster could drop the SNR to below 10 dB or even cause the SNR to approach 0 dB or become negative in extreme cases. This would make the Wi-Fi network nearly unusable, which is the intent of such an attack.

As the SNR decreases due to an EMF blaster, different outcomes can be observed, such as:

- Decreased throughput performance between a Wi-Fi device and the AP: A lower SNR results in more errors during data transmission. To compensate, the Wi-Fi devices may lower their data rates (switching to a more-robust but slower modulation scheme), reducing overall network throughput;

- Increased latency and retransmissions: Poor SNR causes more packet errors, requiring retransmissions. This increases latency and reduces the efficiency of the network;

- Connection drops: If the SNR falls too low, devices may lose their connection to the Wi-Fi network altogether, as the signal becomes indistinguishable from noise; and

- In extreme cases, a very low SNR due to a powerful EMF blaster could effectively render the spectrum unusable.

As a real-world example of the impact of an EMF blaster on connectivity to an AP, assume that a Wi-Fi access point operates on the 2.4 GHz band with an initial SNR of 30 dB, which provides excellent connectivity. If an EMF blaster is introduced that raises the noise level by 20 dB, the SNR could drop to 10 dB or lower. At this point, Wi-Fi devices could experience significant data transmission errors, causing the network to slow down and potentially become unusable.

Reduced SNR is a strong indicator of a possible attack, but SNR alone is not reliable enough by itself to provide the level of accuracy required to identify an active jamming attack with a very high degree of certainty. Additional possible metrics include (but are not limited to):

- PER (Packet Error Rate): Measures the percentage of packets that are received incorrectly due to errors and need retransmission;

- Throughput: The actual rate of successful data transmission over the network, typically measured in Mbps (megabits per second) or Gbps (Gigabits per second);

- Latency and Jitter: Latency refers to the time it takes for a data packet to travel from the sender to the receiver and back, typically measured in milliseconds (ms), while jitter is the variation in packet arrival times;

- MCS (Modulation and Coding Scheme): The MCS index represents the combination of modulation (how data is encoded in the carrier wave) and coding rate used for data transmission. Under heavy interference from an EMF blaster, Wi-Fi devices may downgrade their MCS index to a more-robust, lower-data-rate modulation scheme to maintain connectivity. This adaptation leads to lower throughput;

- Retransmission Rate: The number of data packets that need to be resent due to transmission errors;

- BER (Bit Error Rate): The number of bit errors per unit time or number of bits transmitted;

- Connection Stability: The interference caused by an EMF blaster can cause frequent disconnections and reconnections, especially for devices farther away from the access point or with weaker signals.

- Channel Utilization: The percentage of time the Wi-Fi channel is busy, either transmitting data or experiencing interference. For example, if channel utilization suddenly spikes above 80% to 90% without corresponding data throughput (indicating legitimate traffic), it may be a leading indicator of intentional interference.

In certain embodiments, the sentry agent applies a real-time scoring formula to a multitude of these datapoints, which, in seconds, can trend and identify a jamming attack with a very high degree of accuracy. Each metric is assigned a scoring value range, based on the strength of the metric as an indicator of a jamming attack (some metrics are stronger direct indicators, while others are supportive). Datapoints may include the actual value of the metric (scoring increases when the metric reaches certain value thresholds) and/or the change rate of the metric (i.e., how quickly does the measured value of the metric shift in a short period of time). The values can be calculated in different ways based on the level of accuracy (and associated complexity) required. Computational power constraints and the ability for rapid collection of the necessary Wi-Fi performance data can pose challenges, so different calculations (e.g., additive, multiplicative, and/or logarithmic) may be used based on those constraints.

In additive calculations, a jammer-detection variable V for a particular metric (e.g., SNR) is generated using a weighted sum of the related factors (F1, F2, F3) using an equation like $V = aF1 + bF2 + cF3$, where F1 is the absolute value of the metric, F2 is the rate of change of the metric, F3 is an optional link to another Wi-Fi metric that is directly related to this value being of interest (e.g., such as the relationship between low Throughput and Channel Utilization), and a, b, c are coefficients that determine the relative contribution of each factor to the variable.

In multiplicative calculations, a jammer-detection variable V for a metric is generated using a weighted product of the related factors (F1, F2, F3) using an equation like $V = k \times F1^a \times F2^b \times F3^c$, where k is a constant that may reflect the relative importance of the variable V compared to other jammer-detection variables, and a, b, and c are exponents that determine how strongly each factor influences the variable V.

Since an important factor in the detection of jamming is the growth/change rate of a jammer-detection variable V, the relationship to other metrics can be more complex and a logarithmic calculation can be preferred, such as $V = \log(F1) + e^{F2} \times F3^a$, where F1 influences the variable V logarithmically, F2 exponentially, and F3 through a power law. Those skilled in the art will understand that this is just one example of a logarithmic calculation, which in general will include an arithmetic combination of one or more of logarithmic, exponential, and power law terms.

An example of a scoring formula for jamming detection could involve some or all of the following, bearing in mind that the scoring may change when these metrics are impacted across multiple bands simultaneously and that other metrics may also be considered:

- A rapid rate of change in SNR (over a few seconds) to a sustained value below 15db;

- A rapid noise floor increase of 10db or more over the normal baseline (over a few seconds). A steady increase of noise above -85 dBm across multiple Wi-Fi frequencies would be a strong indicator of a multiband EMF attack;

- A rapid increase in channel utilization from the baseline (over a few seconds) to above the 80%-90% range;

- PER increase of 10% or more over a short period of time (a few seconds) to a value above 20%;

- Rapid increase (over a few seconds) of retransmission rate above 15%-20%;

- Rapid increase in BER (over a few seconds) to a value of 1 in a 100 (or worse);

- Rapid spike in client disconnects (over a few seconds) as evidenced by client disassociation and/or client deauthentication Wi-Fi messages/events;

- Significant decrease in throughput in a short period of time (a few seconds) with linking to the channel utilization value. One would assume throughput to be high in periods of high utilization, but, when throughput falls while channel utilization spikes, the throughput metric gains a high weighted value;

- Measurement of latency between the end-user device and AP, measured by passive or active probing from the AP. Active proving can be done continuously or be triggered by an increase in other metrics.

Wi-Fi denial-of-service (DoS) attacks differ from EMF jamming by being based on trying to exploit IEEE 802.11 messaging (such as management frames and/or other in-protocol messaging). These types of attacks require a higher level of sophistication and are traditionally not tied to the physical theft of goods (e.g., stealing a vehicle from a driveway or breaking-and-entering into households). Also, many of these types of attacks can be detected, if not mitigated more easily within the AP themselves, albeit such features are more often relegated to "enterprise" class APs and not residential devices.

The most-common style of Wi-Fi DoS attacks include:

- Deauthentication Attack: This is one of the most-common methods to force a device to disconnect from a Wi-Fi network. The attacker sends forged deauthentication frames to a target client device or the access point to disrupt the connection;

- Disassociation Attack: A disassociation attack is similar to a deauthentication attack but uses disassociation frames instead. The goal is to disrupt the connection between the client and the AP temporarily; and

- 802.11 RTS/CTS Flood Attack: This attack targets the channel rather than individual devices. The attacker floods the network with RTS (Request To Send) frames, requesting to use the channel. AP or nearby devices respond with CTS (Clear To Send) frames, reserving the channel for the attacker. The constant exchange of RTS/CTS frames keeps the channel busy, preventing legitimate communication.

These styles of attack require more time, effort, and sophistication and are rarely linked to residential Wi-Fi jamming attacks. They also can be more easily detected and mitigated, by features such as:

- IDPS (Intrusion Detection and Prevention Systems): An IDPS monitors wireless network traffic to detect suspicious activities, such as unauthorized access, network attacks, or abnormal behaviors. It uses predefined rules or anomaly detection to identify potential threats and can either alert administrators (detection) or automatically block harmful activities (prevention), helping to protect the Wi-Fi network from breaches and attacks; and

- MFP (Management Frame Protection): The IEEE 802.11 protocol offers its own protection mechanisms, such as 802.11w for protected management frames.

When the scoring reaches a pre-determined threshold (each band potentially having a different scoring threshold due to their inherent nature with 2.4GHz having higher thresholds due to it being more congested than 5GHz and 6GHz), the sentry agent will provide notification facilities to communicate the jamming attack. Such notification can be done via a myriad of methods, such as (but not limited to) SNMP (Simple Network Management Protocol) event notifications, MQTT (Message Queuing Telemetry Transport) messages, various web-based (REST (Representational State Transfer), etc.) messaging protocols, and mobile device notification-based messaging (Android, iOS, etc.). These messages can be sent to one or many destinations, such as security/alarm companies servicing the end-user, various law enforcement bodies, the end-user via mobile phones, etc.

The sentry agent in the AP can also attempt to mitigate active jamming via inherent capabilities of the Wi-Fi standards (such as Wi-Fi 7 MLO (multi-link operations), client/band steering, etc.).

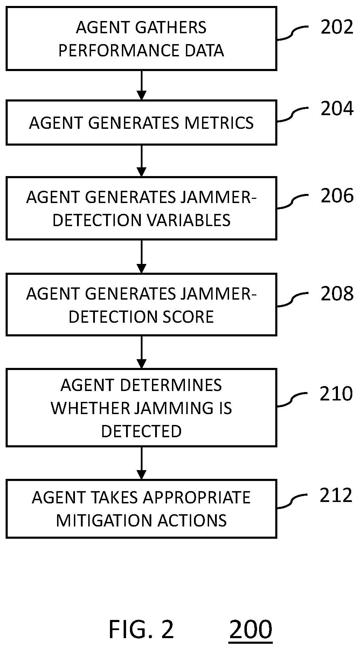

FIG. 2 is a flow diagram of processing 200 performed by a sentry agent implemented in either the AP 130 or the backend 140 of the Wi-Fi network 100 of FIG. 1 to detect and mitigate jamming according to certain embodiments. In step 202, the sentry agent gathers performance data associated with the communications between the AP 130 and the UE 110. In some implementations, some of the gathered performance data is associated with communications between the AP 130 and other UEs in the Wi-Fi network 100.

In step 204, the sentry agent generates a number of different metrics from the gathered performance data. As described above, these metrics may include two or more of an SNR metric, a PER metric, a throughput metric, a latency metric, a jitter metric, an MCS metric, a retransmission rate metric, a BER metric, a connection stability metric, and a channel utilization metric.

In step 206, the agent generates a number of jammer-detection variables based on the metrics. Depending on the implementation, a jammer-detection variable may be generated from the absolute value of a metric and/or the changes in that metric over time using either an additive, multiplicative, or logarithmic calculation.

In step 208, the sentry agent generates a jammer-detection score. In some implementations, each jammer-detection variable is independently compared to an appropriate, corresponding threshold value to determine whether the jammer-detection variable in indicative of jamming, in which case the jammer-detection score is incremented (i.e., increased by one); otherwise, the jammer-detection score is not incremented. In these implementations, the jammer-detection score is the number of different jammer-detection variables that are indicative of jamming.

In other implementations, for each jammer-detection variable that is indicative of jamming, the jammer-detection score is increased by a value based on how much the threshold was violated; otherwise, the jammer-detection score is not incremented.

In still other implementations, if the jammer-detection variable is indicative of jamming, then the jammer-detection score is increased by a constant representing the importance of that jammer-detection variable in detecting jamming relative to other jammer-detection variables. In those implementations, the final jammer-detection score is a weighted result that takes into account the relative importance of the different jammer-detection variables to detecting jamming.

In other implementations, some or all of the different jammer-detection variables are directly combined in an appropriate manner (e.g., a weighted sum) to generate the jammer-detection score. Here, too, the final jammer-detection score may be a weighted result that takes into account the relative importance of the different jammer-detection variables to detecting jamming.

In step 210, the sentry agent compares the jammer-detection score to an appropriate threshold to determine whether jamming is detected. In some implementations, a positive determination of jamming may require a certain number of positive results within a certain period of time or within a specified number of instances, e.g., three positive results in a row or at least four of the last six results being positive. Upon determination that jamming is detected, in step 212, the sentry agent performs one or more appropriate mitigation actions such as those described above.

In certain embodiments, the present disclosure is an apparatus for detecting jamming in a wireless network, the apparatus comprising at least one processor and at least one memory storing instructions that, upon being executed by the at least one processor, cause the apparatus at least to gather performance data associated with communications in the wireless network; generate a plurality of metrics based on the performance data; and determine whether jamming exists based on the plurality of metrics.

In at least some of the above embodiments, the apparatus determines whether the jamming exists by generating a jammer-detection variable based on the metric and/or changes in the metric over time; generating a jammer-detection score based on the plurality of jammer-detection variables; and determining whether the jamming exists based on the jammer-detection score.

In at least some of the above embodiments, at least one jammer-detection variable is generated by performing an additive calculation based on the metric and the changes in the metric over time.

In at least some of the above embodiments, at least one jammer-detection variable is generated by performing a multiplicative calculation based on the metric and the changes in the metric over time.

In at least some of the above embodiments, at least one jammer-detection variable is generated by performing a logarithmic calculation based on the metric and the changes in the metric over time.

In at least some of the above embodiments, the jammer-detection score is generated by comparing each jammer-detection variable to a corresponding threshold to determine whether the jammer-detection variable is indicative of jamming, wherein the jammer-detection score is the number of jammer-detection variables that are indicative of jamming.

In at least some of the above embodiments, the jammer-detection score is generated by comparing each jammer-detection variable to a corresponding threshold to determine whether the jammer-detection variable is indicative of jamming and the jammer-detection score is increased by a value based on how much the corresponding threshold was violated.

In at least some of the above embodiments, the jammer-detection score is generated by comparing each jammer-detection variable to a corresponding threshold to determine whether the jammer-detection variable is indicative of jamming and the jammer-detection score is a weighted sum based on the jammer-detection variables that are indicative of jamming and relative importance of those jammer-detection variables to detecting jamming.

In at least some of the above embodiments, the jammer-detection score is generated by directly combining the plurality of jammer-detection variables.

In at least some of the above embodiments, the plurality of metrics comprise two or more of a signal-to-noise ratio (SNR) metric, a packet error rate (PER) metric, a throughput metric, a latency metric, a jitter metric, a modulation and coding scheme (MCS) metric, a retransmission rate metric, a bit error rate (BER) metric, a connection stability metric, and a channel utilization metric.

In at least some of the above embodiments, the plurality of metrics comprise a signal-to-noise ratio (SNR) metric.

In at least some of the above embodiments, the plurality of metrics comprise a packet error rate (PER) metric.

In at least some of the above embodiments, the plurality of metrics comprise a throughput metric.

In at least some of the above embodiments, the plurality of metrics comprise a latency metric.

In at least some of the above embodiments, the plurality of metrics comprise a jitter metric.

In at least some of the above embodiments, the plurality of metrics comprise a modulation and coding scheme (MCS) metric.

In at least some of the above embodiments, the plurality of metrics comprise a retransmission rate metric.

In at least some of the above embodiments, the plurality of metrics comprise a bit error rate (BER) metric.

In at least some of the above embodiments, the plurality of metrics comprise a connection stability metric.

In at least some of the above embodiments, the plurality of metrics comprise a channel utilization metric.

In at least some of the above embodiments, the apparatus is an access point of the wireless network.

In at least some of the above embodiments, the apparatus is a backend of the wireless network.

In at least some of the above embodiments, the wireless network is a Wi-Fi network.

Unless explicitly stated otherwise, each numerical value and range should be interpreted as being approximate as if the word "about" or "approximately" preceded the value or range.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence. Likewise, additional steps may be included in such methods, and certain steps may be omitted or combined, in methods consistent with various embodiments of the disclosure.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also, for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure.

As used herein in reference to an element and a standard, the terms "compatible" and "conform" mean that the element communicates with other elements in a manner wholly or partially specified by the standard and would be recognized by other elements as sufficiently capable of communicating with the other elements in the manner specified by the standard. A compatible or conforming element does not need to operate internally in a manner specified by the standard.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. Upon being provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As will be appreciated by one of ordinary skill in the art, the present disclosure may be embodied as an apparatus (including, for example, a system, a network, a machine, a device, a computer program product, and/or the like), as a method (including, for example, a business process, a computer-implemented process, and/or the like), or as any combination of the foregoing. Accordingly, embodiments of the present disclosure may take the form of an entirely software-based embodiment (including firmware, resident software, micro-code, and the like), an entirely hardware embodiment, or an embodiment combining software and hardware aspects that may generally be referred to herein as a "system" or "network".

Embodiments of the disclosure can be manifest in the form of methods and apparatuses for practicing those methods. Embodiments of the disclosure can also be manifest in the form of program code embodied in tangible media, such as magnetic recording media, optical recording media, solid state memory, floppy diskettes, CD-ROMs, hard drives, or any other non-transitory machine-readable storage medium, wherein, upon the program code being loaded into and executed by a machine, such as a computer, the machine becomes an apparatus for practicing the disclosure. Embodiments of the disclosure can also be manifest in the form of program code, for example, stored in a non-transitory machine-readable storage medium including being loaded into and/or executed by a machine, wherein, upon the program code being loaded into and executed by a machine, such as a computer, the machine becomes an apparatus for practicing the disclosure. Upon being implemented on a general-purpose processor, the program code segments combine with the processor to provide a unique device that operates analogously to specific logic circuits. The term "non-transitory," as used herein, is a limitation of the medium itself (i.e., tangible, not a signal) as opposed to a limitation on data storage persistency (e.g., RAM vs. ROM).

Signals and corresponding terminals, nodes, ports, links, interfaces, or paths may be referred to by the same name and/or label and are interchangeable for purposes here.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the phrases "at least one of A and B" and "at least one of A or B" are both to be interpreted to have the same meaning, encompassing the following three possibilities: 1- only A; 2- only B; 3- both A and B.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

While preferred embodiments of the disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the technology of the disclosure. It is intended that the following claims define the scope of the invention and that methods and structures within the scope of these claims and their equivalents be covered thereby.

**Claims**

1. Apparatus for detecting jamming in a wireless network, the apparatus comprising:

   at least one processor; and
   at least one memory storing instructions that, upon being executed by the at least one processor, cause the apparatus at least to:

   gather performance data associated with communications in the wireless network;
   generate a plurality of metrics based on the performance data; and
   determine whether jamming exists based on the plurality of metrics.

2. The apparatus of claim 1, wherein the apparatus determines whether the jamming exists by:

   generating a jammer-detection variable based on the metric and/or changes in the metric over time;
   generating a jammer-detection score based on the plurality of jammer-detection variables; and
   determining whether the jamming exists based on the jammer-detection score.

3. The apparatus of claim 2, wherein at least one jammer-detection variable is generated by performing an additive calculation based on the metric and the changes in the metric over time.

4. The apparatus of claims 2-3, wherein at least one jammer-detection variable is generated by performing a multiplicative calculation based on the metric and the changes in the metric over time.

5. The apparatus of claims 2-4, wherein at least one jammer-detection variable is generated by performing a logarithmic calculation based on the metric and the changes in the metric over time.

6. The apparatus of claim 2, wherein the jammer-detection score is generated by:

   comparing each jammer-detection variable to a corresponding threshold to determine whether the jammer-detection variable is indicative of jamming; and
   the jammer-detection score is the number of jammer-detection variables that are indicative of jamming.

7. The apparatus of claims 2, wherein the jammer-detection score is generated by:

   comparing each jammer-detection variable to a corresponding threshold to determine whether the jammer-detection variable is indicative of jamming; and

the jammer-detection score is increased by a value based on how much the corresponding threshold was violated.

8. The apparatus of claim 2, wherein the jammer-detection score is generated by:

comparing each jammer-detection variable to a corresponding threshold to determine whether the jammer-detection variable is indicative of jamming; and

the jammer-detection score is a weighted sum based on the jammer-detection variables that are indicative of jamming and relative importance of those jammer-detection variables to detecting jamming.

9. The apparatus of claim 2, wherein the jammer-detection score is generated by directly combining the plurality of jammer-detection variables.

10. The apparatus of claim 1, wherein the plurality of metrics comprise two or more of a signal-to-noise ratio (SNR) metric, a packet error rate (PER) metric, a throughput metric, a latency metric, a jitter metric, a modulation and coding scheme (MCS) metric, a retransmission rate metric, a bit error rate (BER) metric, a connection stability metric, and a channel utilization metric.

11. The apparatus of claim 1, wherein the plurality of metrics comprises a signal-to-noise ratio (SNR) metric, a packet error rate (PER) metric, a throughput metric, a latency metric, a jitter metric. a modulation and coding scheme (MCS) metric, a bit error rate (BER) metric, a channel utilization metric, a connection stability metric or a retransmission rate metric.

12. The apparatus of claim 1, wherein the apparatus is an access point of the wireless network or a backend of the wireless network.

13. The apparatus of claim 1, wherein the wireless network is a Wi-Fi network.

14. A processor-implemented method for detecting jamming in a wireless network, the method comprising the processor:

gathering performance data associated with communications in the wireless network;
generating a plurality of metrics based on the performance data; and
determining whether jamming exists based on the plurality of metrics.

FIG. 1   100

AGENT GATHERS PERFORMANCE DATA — 202

AGENT GENERATES METRICS — 204

AGENT GENERATES JAMMER-DETECTION VARIABLES — 206

AGENT GENERATES JAMMER-DETECTION SCORE — 208

AGENT DETERMINES WHETHER JAMMING IS DETECTED — 210

AGENT TAKES APPROPRIATE MITIGATION ACTIONS — 212

FIG. 2      200

Europäisches
Patentamt
European
Patent Office
Office européen
des brevets

# EUROPEAN SEARCH REPORT

**Application Number**

EP 25 19 0796

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/045075 A1 (DHALIWAL ARJAN SINGH KAMERON [GB] ET AL) 8 February 2024 (2024-02-08) * abstract * * paragraph [0002] - paragraph [0029] * * paragraph [0047] - paragraph [0114] * * figures 1-15 * ----- | 1-14 | INV. H04K3/00 |
| X | PUNAL OSCAR ET AL: "Machine learning-based jamming detection for IEEE 802.11: Design and experimental evaluation", PROCEEDING OF IEEE INTERNATIONAL SYMPOSIUM ON A WORLD OF WIRELESS, MOBILE AND MULTIMEDIA NETWORKS 2014, IEEE, 19 June 2014 (2014-06-19), pages 1-10, XP032656469, DOI: 10.1109/WOWMOM.2014.6918964 [retrieved on 2014-10-08] * the whole document * ----- | 1-14 | |

**TECHNICAL FIELDS SEARCHED (IPC)**

H04K

The present search report has been drawn up for all claims

| Place of search | Date of completion of the search | Examiner |
|---|---|---|
| The Hague | 2 October 2025 | Dujardin, Corinne |

EPO FORM 1503 03.82 (P04C01)

## ANNEX TO THE EUROPEAN SEARCH REPORT
## ON EUROPEAN PATENT APPLICATION NO.

EP 25 19 0796

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2025

| Patent document cited in search report | Publication date | Patent family member(s) | Publication date |
|---|---|---|---|
| US 2024045075 A1 | 08-02-2024 | EP 4328625 A2 | 28-02-2024 |
| | | GB 2621176 A | 07-02-2024 |
| | | US 2024045075 A1 | 08-02-2024 |

EPO FORM P0459

For more details about this annex : see Official Journal of the European Patent Office, No. 12/82